# FASCICULE DE BREVET EUROPEEN

(11) **EP 0 407 565 B1**
(45) Date de publication et mention de la délivrance du brevet: **23.11.1994**
(21) Numéro de dépôt: 90903022.3
(22) Date de dépôt: 29.01.1990
(51) Int. Cl.: B23D 47/04, B23D 51/04, B23D 55/04, B23Q 7/00

(54) **DISPOSITIF POUR DEGAGER UN TRONCON COUPE A LONGUEUR SUR UNE SCIE A MOTEUR**
VORRICHTUNG ZUM HERAUSHEBEN EINES AUF LÄNGE GESCHNITTENEN WERKSTÜCKS AUS EINER MOTORANGETRIEBENEN SÄGE
DEVICE FOR REMOVING A SECTION CUT TO LENGTH ON A POWER SAW

(30) Priorité: 30.01.1989 FR 8901111
(43) Date de publication de la demande: 16.01.1991
(73) Titulaire: MOROSINI, Flavio, F-54800 Hatrize (FR)
(72) Inventeur: MOROSINI, Flavio, F-54800 Hatrize (FR)
(86) Numéro de dépôt international: FR9000069
(87) Numéro de publication internationale: WO9008615

(56) Documents cités:
- DE-A- 3 542 605
- DE-B- 2 353 533
- DE-U- 7 125 425
- US-A- 3 136 071
- US-A- 3 862 583

## Description

L'invention a pour objet un dispositif qui peut être adjoint à une scie à moteur - ou être incorporé à celle-ci dès sa construction - pour dégager un tronçon d'une pièce allongée coupé par cette scie à une longueur déterminée par la position d'une butée contre laquelle est appuyée préalablement cette pièce allongée.

Le type de la scie à laquelle s'applique l'invention n'est pas limité par cette dernière ; il s'agit de toute scie, à lame rectiligne, ou à lame continue, ou à disque denté, ou encore à disque-meule coupant par abrasion ; cependant, les scies les plus fréquemment concernées par l'invention sont les scies à disque denté que l'on emploie couramment sur les chantiers de construction et que l'on appelle donc souvent scies de chantier. Dans ce qui suit on appellera lame de sciage tous ces outils de coupe.

La nature des pièces allongées n'est pas non plus limitée par l'invention ; il peut s'agir soit de pièces métalliques telles que des barres cylindriques, soit de poteaux en bois à section ronde ou carrée, soit de toute autre pièce allongée.

L'invention est utile dès qu'il s'agit de couper, à l'aide d'une lame de sciage montée sur un organe mobile déplaçant cette lame dans le sens de la coupe, un tronçon d'une pièce allongée dont la longueur du tronçon à scier est déterminée à l'aide d'une butée contre laquelle est appuyée, avant et pendant l'opération de coupe, une face extrême libre de ladite pièce allongée.

Sur les scies auxquelles s'appliquent l'invention, la butée est déplaçable par coulissement ou glissement dans des sens d'éloignement ou de rapprochement du plan de la lame de scie, souvent devant une échelle graduée, et elle est bloquée fermement à sa position quand elle est éloignée de la lame de scie d'une distance désirée.

Cette butée reste bloquée à cette position pendant l'exécution de la totalité de l'opération de sciage. Au début de cette opération le tronçon compris entre la butée et la lame de scie est encore fortement réuni au reste de la pièce allongée qui est fermement immobilisée, le plus souvent dans un étau. A mesure que le sciage progresse, le tronçon est de moins en moins bien tenu en place par la partie de section diminuante qui le reunit à la pièce allongée. En même temps, le tronçon est contenu sans jeu en sens longitudinal entre une face latérale de la lame de sciage et de la face de la butée contre laquelle la pièce al longée a été appuyée. Le frottement qui se produit inévitablement entre la lame de sciage et le tronçon en cours de sciage a pour conséquence qu'une force transversale est appliquée à l'extrémité du tronçon qui est en contact avec la lame de sciage. Vers la fin de l'opération de sciage, cette force transversale devient assez forte pour vaincre la résistance de la partie de section diminuante qui reste à scier. Il est assez frequent que le tronçon soit arraché assez brutalement de la pièce allongée, par suite de la rupture brusque de la partie restant à scier. Quelquefois, le tronçon peut être projeté et peut blesser une personne; quelque fois il peut prendre une position oblique et être coincé entre la butée et la lame de sciage, risquant d'endommager celle-ci. Dans de nombreuses circonstances, le tronçon scié est simplement dépla cé par rapport à la position initiale avant sciage, mais sa position finale n'est pas prévisible, ce qui est défavorable à l'installation et au fonctionnément correct d'un dispositif automati que d'évacuation successive de chaque tronçon scié parce qu'un tel dispositif nécessite que le tronçon scié prenne toujours une position précise prédéterminée.

Dans l'état de la technique actuelle quelques systèmes exitent pour resoudre de tels inconvenients, mais ils font tous appel à des moyens complexes ayant besoin de plusieurs sources d'énergies simultanées: électricité, hydraulique et ou air comprimé donc inaceptable pour des scies de chantier, ou seule l'énergie électrique est disponible.

Le document DE-U-7125425 décrit un type de ces machines citées ci-dessus, elle se compose d'une scie circulaire à bois comprenant un batit sur lequel est monté coulissant sous l'action d'un vérin pneumatique un groupe-moteur-lame de scie. Sur ce vérin pneumatique est branché par l'intérmédiare d'un clapet de fin de course un vérin auxiliaire dont la tige de piston peut être saillante pour servir de butée à une pièce à scier ou peut être rétractée pour laisser totalement libre cette même pièce à scier. Les deux positions de la butée sont obtenues par un fluide sous pression. Le document DE-A-3542605 décrit une scié analogue à celle du document DE-U-7125425. Le panneau à scier vient en butée contre les tiges de pistons saillantes de plusieurs vérins pneumatiques à manoeuvre rapide et nécessitant une source de fluide sous pression.

L'invention a donc pour but principal d'apporter un disposi sitif qui élimine le risque d'entrainement en sens transversal par la lame de sciage d'un tronçon scié à une longueur définie par une butée,en vue de supprimer les risques de projection, de coincement ou même de déplacement à une position quelconque aléatoire du tronçon scié et de remedier aux inconvenients cités ci dessus par un concept de réalisation totalement différent, pour obtenir un déplacement progressif de la butée et ne nécessitant pas de source de fluide sous pression auxiliaire.

Un but secondaire, conséquence directe du but principal de l'invention, est de combiner, en outre, avec le dispositif principal évoqué ci-dessus, un dispositif accessoire capable d'évacuer le tronçon scié de manière automatique dès l'achèvement de l'opération de sciage.

Un dispositif pour dégager un tronçon scié dans une pièce allongée sur une machine à scier ayant un bâti, un étau monté sur ce bâti pour tenir une pièce allongée, un organe mobile monté déplaçable sur ce bâti pour l'exécution d'une course de sciage dans un plan transversal à une pièce allongée tenue dans l'étau, une lame de sciage montée sur cet organe mobile et entraînée par un moteur, une butée montée mobile sur un élément du bâti et réglable en position sur cet élément à l'opposé de l'étau par rapport à la lame de sciage, comprend, conformément à l'invention, des paliers fixés au bâti et contenant partiellement ledit élément portant la butée mobile pour le guider en pivotement autour d'un axe perpendiculaire audit plan transversal, des moyens de liaison cinématique de type mécanique ou électrique reliant l'organe portant la lame de sciage avec l'élément portant la butée, ces moyens de liaison provoquant le pivotement de cet élément et de la butée progressivement à partir de la position initiale de cette dernière pendant chaque opération de sciage, de sorte que, avant la fin de cette opération, la butée est éloignée de sa position initiale suffisamment pour ne plus être en contact avec un tronçon quelconque en cours de sciage et pour dégager ce tronçon de tout contact avec la butée.

Les moyens de liaison cinématique de type mécanique comprennent de préférence au moins une bielle articulée d'une part par une première extrémité avec l'organe mobile portant la lame de sciage, d'autre part par sa seconde extrémité avec l'élément portant la butée.

Avantageusement la bielle est articulée avec l'organe mobile portant la lame de sciage par l'intermédiaire d'une tige de longueur réglable, cette tige ayant une première extrémité articulée avec la première extrémité de la bielle et une seconde extrémité par laquelle elle est fixée à une pièce de l'organe mobile déplaçable en même temps que ce dernier.

Selon un perfectionnement de l'invention, au dispositif défini ci-dessus s'ajoute un dispositif qui comprend en outre un arbre supplémentaire supporté parallèlement audit axe de pivotement dans des paliers fixés au bâti, une partie au moins d'une table de soutien étant montée mobile en rotation autour de l'axe géométrique dudit arbre supplémentaire et étant reliée fonctionnellement à un organe de manoeuvre disposé sur le bâti pour être actionné par l'organe portant la lame de sciage à la fin de la course de sciage après l'exécution de l'opération de sciage, cet organe de manoeuvre poussant alors la partie de la table de soutien jusqu'à une position d'évacuation d'un tronçon séparé de la pièce allongée contre l'effet d'un ressort de rappel de cette partie de table à sa position initiale.

Dans un exemple de réalisation de l'invention, l'ensemble de la table de soutien est montée mobile autour de l'axe géométrique dudit axe.

Selon un mode de réalisation de l'invention, l'arbre est pourvu d'un bras radial et un poussoir est monté coulissant sur le bâti pour reposer sur ce bras radial et être actionné contre l'effet du ressort de rappel par l'organe mobile portant la lame de sciage après l'exécution de l'opération de sciage.

Selon un autre mode de réalisation de l'invention, l'organe de manoeuvre est accouplé à la bielle par l'intermédiaire d'un accouplement à course morte pendant l'exécution de l'opération de coupe et à course active après l'opération de coupe.

On donnera maintenant, sans intention limitative, une description de plusieurs exemples de réalisation de l'invention. On se reportera aux dessins annexés dans lesquels :
- la figure 1 est une vue de côté d'une tronçonneuse de chantier équipée d'un dispositif conforme à l'invention ;
- la figure 2 est une vue en perspective du dispositif de l'invention qui équipe la tronçonneuse de la figure 1 ;
- la figure 3 est une vue partielle analogue à la figure 1 montrant une variante de réalisation du dispositif de l'invention ;
- les figures 4 et 5 sont des vues de détail se rapportant à une autre variante de l'invention.

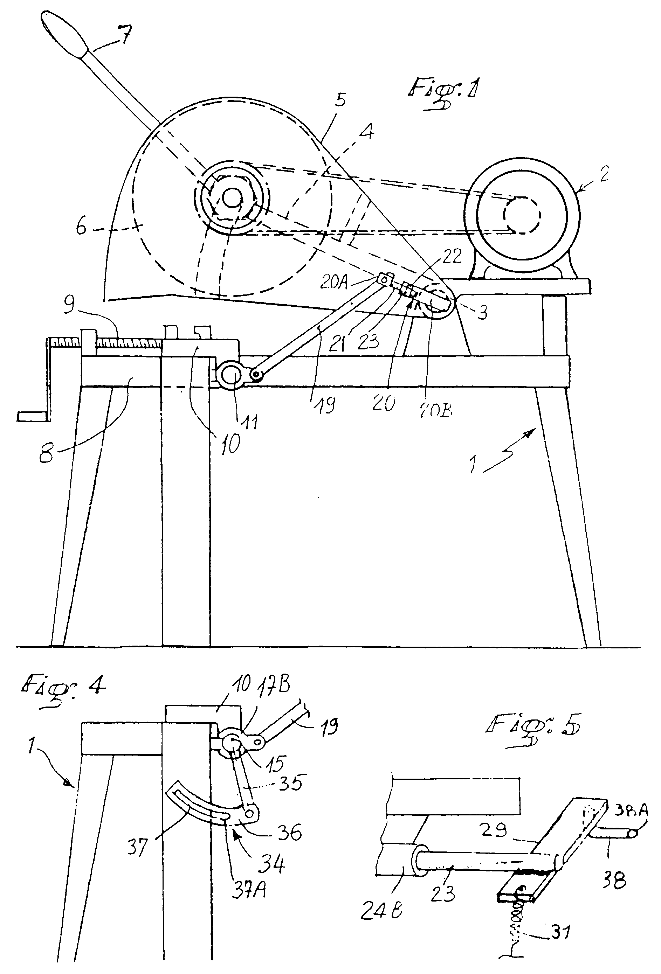

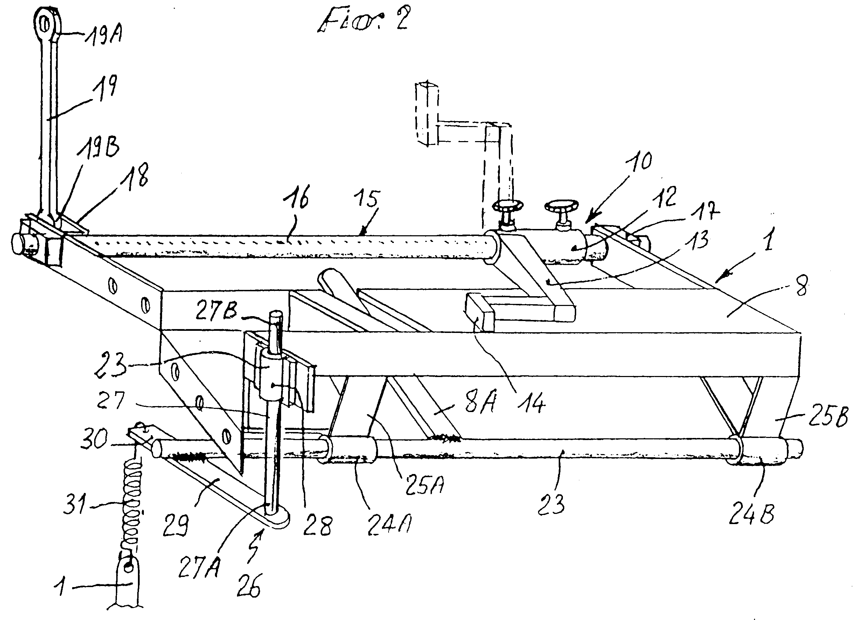

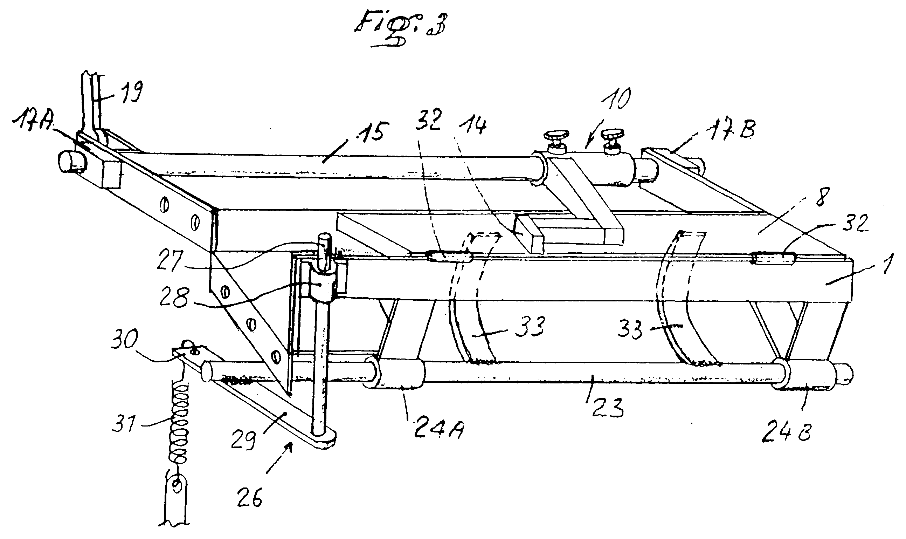

La figure 1 est la représentation simplifiée d'une tronçonneuse de chantier de type courant bien connu qui ne sera donc pas décrit en détail. Cette tronçonneuse se compose d'un bâti 1 qui porte un moteur 2 ainsi qu'un arbre 3 supporté par le bâti 1 pour pouvoir pivoter en même temps qu'un bras 4 fixé par une extrémité à cet arbre 3. A l'autre extrémité du bras 4 est montée à l'intérieur d'un carter de protection 5, une lame de sciage 6 qui est, dans cet exemple, un disque circulaire denté à sa périphérie. Le bras 4 est manoeuvrable aisément à la main à l'aide d'un levier 7 le long d'une course de sciage, pour l'exécution d'une opération de sciage, entre une position supérieure - à laquelle il se trouve sur la figure 1 - et une position inférieure à laquelle la lame de sciage 6 a terminé l'exécution d'une opération de sciage au cours de laquelle le moteur 2 entraîne en rotation cette lame de sciage 6. Le bras 4 est l'organe mobile qui permet l'exécution d'une course de sciage.

En-dessous de l'emplacement de la course de sciage dans un plan vertical de la lame de sciage 6, le bâti 1 supporte une table de soutien 8 sur laquelle est installé un étau à main 9 d'un côté de la lame de sciage 6 et une butée mobile 10 du côté opposé à l'étau 9 par rapport à la lame de sciage 6.

Sur une tronçonneuse classique la butée 10 est déplaçable par coulissement ou glissement le long d'un élément 11 du bâti 1. Cet élément 11 est, par exemple, un arbre fixe en position sur lequel la butée 10 peut être bloquée à une position quelconque désirée qui définit avec la lame de sciage 6 la longueur d'un tronçon à couper dans une pièce allongée serrée dans l'étau 9.

On se reportera maintenant aux figures 1 et 2 et principalement à la figure 2 qui montre le dispositif de l'invention qui équipe la tronçonneuse de chantier qui vient d'être décrite.

La figure 2 ne montre que la partie du bâti 1 qui est nécessaire à la description du dispositif de l'invention.

La butée mobile 10 comprend un moyeu 12 à partir duquel s'étend latéralement un bras transversal 13 terminé par une face d'appui 14 parallèle au plan contenant la lame de sciage 6. Le moyeu 12 est monté pour pouvoir coulisser le long d'un arbre cylindrique 15 qui remplace l'élément classique fixe 11 mentionné plus haut. Cet arbre 15 porte une graduation 16 et il est monté mobile en rotation autour de son axe géométrique longitudinal dans des paliers 17A, 17B qui font partie du bâti 1. Après déplacement de la butée 10 jusqu'à la position désirée, cette butée est fermement immobilisée sur l'arbre 15, à l'aide de vis, par exemple.

A sa partie extrême proche de la lame de sciage 6, l'arbre 15 est pourvu d'une chape 18 s'étendant en sens radial à l'aide de laquelle il est articulé avec une seconde extrémité 19B d'une bielle 19. La première extrémité 19A de cette bielle est articulée avec une première extrémité 20A conformée en chape d'une tige 20 (figure 1) de longueur réglable au moyen, par exemple, d'une tige filetée 21 fixée à la chape 20A et engagée dans un écrou 22 accompagné d'un contre-écrou de blocage 23. L'écrou 22 est fixé à une seconde partie extrême 20 B de la tige 20. Cette seconde partie extrême 20 B est fixée à l'extrémité du bras mobile 4 associée à l'arbre 3. De cette façon, l'ensemble articulé comprenant la tige 20, la bielle 19 , l'arbre 15, la butée 10 pivote en même temps que pivote le bras 4 portant la lame de sciage 6. Mais cet ensemble pivote en sens inverse : quand la lame de sciage 6 descend au cours d'une opération de sciage, la butée 10 monte pour finir à une position extrême supérieure, à laquelle elle est représentée en trait mixte sur la figure 2, au moment où la lame de sciage 6 parvient à sa position extrême inférieure après exécution de l'opération de sciage.

Pendant ce mouvement la butée 10 quitte progressivement la pièce en cours de sciage (non représentée) qui a été initialement appuyée contre sa face d'appui 14 et elle la laisse totalement dégagée peu de temps avant la fin de l'opération de sciage. Le tronçon en cours de séparation par l'action de la lame de sciage 6 a donc la liberté de prendre un peu de jeu par rapport à cette lame de sciage 6. Le frottement contre la face latérale de celle-ci est substantiellement réduit, devient même inexistant de sorte que le tronçon scié ne risque plus d'être entraîné en déplacement par la lame de sciage ni de se coincer entre cette dernière et la face d'appui 14 de la butée 10.

On remarquera que l'arbre 16 est déplaçable dans ses paliers 17A, 17B en rotation autour de son axe géométrique longitudinal. On pourrait concevoir que cet arbre 16 reste fixe dans ses paliers et que la butée 10 soit déplaçable en rotation autour de l'arbre 16 en étant immobilisée en translation, mais cette réalisation serait plus complexe et plus coûteuse sans apporter d'avantages supplémentaires.

Etant donné que le tronçon détaché par sciage d'une pièce allongée ne risque plus d'être projeté par la lame de sciage, ni coincé entre cette dernière et la face d'appui 14 de la butée 10, ni d'être mise à une position quelconque aléatoire sur la table 8 par l'action de la lame de sciage, il est plus facile d'adjoindre au dispositif qui vient d'être décrit un dispositif accessoire d'évacuation du tronçon scié.

La figure 2 montre qu'un arbre supplémentaire 23 est monté libre en rotation dans des paliers 24A, 24B suspendus par des bras 25A, 25B fixés au bâti 1 en-dessous de la table 8. Cet arbre 23 est parallèle, de préférence, à l'axe géométrique autour duquel pivote la butée 10, comme expliqué plus haut. Une bande transversale 8A qui est découpée dans la table 8 et qui s'étend transversalement à l'arbre supplémentaire 23 est fixée à ce dernier par une extrémité.

La bande transversale 8A est reliée fonctionnellement par l'intermédiaire de l'arbre 23 à un organe de manoeuvre désigné par la référence 26. Cet organe 26 comprend un poussoir 27 perpendiculaire dans l'ensemble à la surface de la table 8 et monté coulissant dans un guide 28 fixé au bâti 1. Le poursoir 27 a une extrémité inférieure 27A qui repose sur un bras radial 29 fixé à l'arbre 23. De préférence, le bras 29 s'étend de l'autre côté de l'arbre 23 par un prolongement 30 auquel est attachée une extrémité d'un ressort de rappel 31 dont l'autre extrémité est attachée au bâti 1. Le ressort 31 tend à mettre le poussoir 27, l'arbre 23, la bande transversale 26 de la table 8 à une première position que cette bande 26 occupe avant l'exécution de l'opération de sciage.

Le poussoir 27 a une extrémité supérieure 27B qui est située pour être rencontrée par un point du bras 4 quand celui-ci est sur le point d'arriver à la fin de sa course après exécution de l'opération de sciage. A ce moment, le poussoir 27 est enfoncé, l'arbre 23 tourne et la partie transversale 8A de la table 8 est soulevée, mouvement de soulèvement pendant lequel elle pousse hors de la table 8 le tronçon qui vient d'être détaché par sciage.

Bien entendu, il pourrait exister plusieurs bandes transversales 8A, espacées le long de l'arbre 23, découpées dans la table 8 et réunies à l'arbre 23 pour être soulevées par ce dernier comme il vient d'être décrit.

La figure 3 montre que l'ensemble de la table 8 pourrait être assemblé avec le bâti 1 au moyen de charnières 32 pour pouvoir être soulevé en totalité par l'action de l'organe de manoeuvre 26. Ce soulèvement de la totalité de la table 8 est possible puisqu'à ce moment la butée 10 est à sa position supérieure où elle est représentée en trait mixte sur la figure 1. Dans ce cas, la face inférieure de la table 8 est reliée à l'arbre 23 par des bras incurvés 33.

Sur les figures 1 à 3, la table 8 est représentée comme étant plane, pour la facilité du dessin, mais elle peut, en pratique, être conformée en V peu accentué pour servir au centrage du tronçon en cours de séparation par sciage.

Les figures 4 et 5 montrent que l'organe de manoeuvre 26, pour le soulèvement de la table 8 ou d'au moins une partie de celle-ci après l'opération de sciage, peut être commandé au moment voulu à partir de la bielle 19 par l'intermédiaire d'un accouplement 34 (figure 4) qui a une course morte rendant inopérante cette bielle 19 sur l'organe de manoeuvre 26 tant que l'opération de sciage n'est pas terminée.

A cette fin, l'arbre 15 s'étend au-delà du palier 17B, à l'opposé de la bielle 19 et il est muni d'une barre 35 radiale par rapport à cet arbre 15, à l'extrémité libre de laquelle est fixé par une extrémité un fer plat 36 incurvé en arc de cercle dont le centre se trouve sur l'axe géométrique de l'arbre 15. Dans ce fer plat 36 est prévue une ouverture allongée 37 également incurvée et centrée autour du même axe. Dans cette ouverture incurvée allongée 37 est engagée une partie extrême 38A d'une branche d'une équerre 38 dont l'autre branche est fixée à l'extrémité du bras radial 29 (figure 5), la tige 27 étant alors supprimée.

Pendant l'exécution de l'opération de sciage et la rotation correspondante de l'arbre 15, la partie extrême 38A se trouve dans l'ouverture allongée 37 et l'arbre supplémentaire 23 ne tourne pas. Quand l'extrémité 37A de l'ouverture 37 rencontre et pousse la partie extrême 38A, après la fin de l'opération de sciage, l'arbre 23 tourne et oblige la table 8 à se soulever comme expliqué précédemment.

L'invention couvre les différentes variantes équivalentes réalisées à l'aide de composants électriques en remplacement des organes mécaniques sans toutefois nécessiter une source d'énergie auxiliaire que celle de la machine à scier. Par exemple, le soulèvement d'une partie 26 ou de plusieurs parties de la table de soutien 8, et même le soulèvement de la table 8 en totalité peut être exécuté par un solénoïde électrique et l'excitation de ce dernier au moment voulu peut être déclenchée par un interrupteur de fin de course actionné par un point quelconque convenable de l'organe mobile ou bras 4, en remplacement du poussoir 27.

## Revendications

1. Dispositif pour dégager un tronçon scié dans une pièce allongée sur une machine à scier ayant un bâti (1), un étau (9) monté sur ce bâti (1) pour tenir une pièce allongée, un organe mobile (4) monté déplaçable sur ce bâti (1) pour l'exécution d'une course de sciage, dans un plan transversal à une pièce allongée tenue dans l'étau, une lame de sciage (6) montée sur cet organe mobile (4) et entraînée par un moteur, une butée (10) montée mobile sur un élément du bâti (15) et réglable en position sur cet élément à l'opposé de l'étau (9) par rapport à la lame de sciage (6), caractérisé en ce qu'il comprend des paliers (17A,17B) fixés au bâti (1) et contenant partiellement ledit élément (15) portant la butée mobile (10) pour le guider en pivotement autour d'un axe perpendiculaire audit plan transversal, des moyens (19, 20) de liaison cinématique de type mécanique ou électrique reliant l'organe (4) portant la lame de sciage (6) avec l'élément (15) portant la butée (10), ces moyens de liaison (19,20) provoquant le pivotement de cet élément (15) et de la butée (10) progressivement à partir de la position initiale de cette dernière pendant chaque opération de sciage de sorte que, avant la fin de cette opération, la butée (10) est éloignée de sa position initiale suffisamment pour ne plus être en contact avec un tronçon quelconque en cours de sciage et pour dégager ce tronçon de tout contact avec la butée.

2. Dispositif selon la revendication 1 caractérisé en ce que, les moyens de liaison cinématique de type mécanique comprennent au moins une bielle (19) articulée d'une part par une première extrémité avec l'organe mobile (4) portant la lame de sciage (6), d'autre part par sa seconde extrémité avec l'élément (15) portant la butée (10).

3. Dispositif selon la revendication 2 caractérisé en ce que la bielle (19) est articulée avec l'organe mobile (4) portant la lame de sciage (6) par l'intermédiaire d'une tige (20) de longueur réglable, cette tige ayant une première extrémité (20A) articulée avec la première extrémité de la bielle (19) et une seconde extrémité (20B) par laquelle elle est fixée à une pièce de l'organe mobile (4) déplaçable en même temps que ce dernier.

4. Dispositif selon l'une quelconque des revendications 1 à 3 pour une machine à scier comprenant une table de soutien (8) d'un tronçon à couper dans une pièce allongée, une partie au moins de ladite table de soutien (8) étant montée mobile en rotation autour d'un axe géométrique, caractérisé en ce que ledit axe géométrique est celui d'un arbre supplémentaire (23) supporté parallèlement audit axe de pivotement dans des paliers (24A,24B) fixés au bâti (1), la partie mobile en rotation de la table de soutien (8) est fixée à cet arbre supplémentaire (23) et elle est reliée fonctionnellement à un organe de manoeuvre (26) disposé sur le bâti (1) pour être actionné par l'organe (4) portant la lame de scie (6) à la fin de la course de sciage après l'exécution de l'opération de sciage, cet organe de manoeuvre (26) poussant alors la partie (8A) de la table de soutien (8) jusqu'à une position d'évacuation d'un tronçon séparé de la pièce allongée contre l'effet d'un ressort de rappel (31) de cette partie de table à sa position initiale.

5. Dispositif selon la revendication 4, caractérisé en ce que l'ensemble de la table de soutien (8) est montée mobile autour de l'axe géométrique dudit arbre supplémentaire (23).

6. Dispositif selon la revendication 4, caractérisé en ce que ladite partie (8A) de la table de soutien (8) est fixée audit arbre supplémentaire (23) et celui-ci est monté libre en rotation dans ses paliers (24A, 24B).

7. Dispositif selon la revendication 4, caractérisé en ce que l'organe de manoeuvre (26) est accouplé à la bielle (19) par l'intermédiaire d'un accouplement (34) à course morte pendant l'exécution de l'opération de sciage et à course active après l'opération de sciage.

8. Dispositif selon la revendication 6 caractérisé en ce que l'arbre supplémentaire (23) est pourvu d'un bras radial (29) et un poussoir (27) est monté coulissant sur le bâti (1) pour reposer sur ce bras radial (29) et être actionné contre l'effet du ressort (31) par l'organe mobile (4) portant la lame de sciage (6) après l'exécution de l'opération de sciage.

## Claims

1. Device for free a sawed section in a long piece on a saw-machine with a frame (1), a vice (9), clamped on this frame for hold a long piece, a moving organ (4) clamped on this frame (1) for the execution of a saw-run, in a transversal plane in relation to a long piece held in the vice, a saw-knife (6) clamped on this moving organ (4) and driven by an engine, a dog (10) clamped, moving, on a element of the frame (15) and adjustable in position on this element on the other side from the vice (9) in relation to the saw-knife (6), characterized by bearings (17A, 17B) clamped on the frame (1) and held (partially), this element (15) carrying the moving dog (10) to control this in pivoting around a perpendicular axle in relation with this transversal plane, means (19, 20) of cinematic connections (of mecanical or electrical type) joining together the organ (4) carrying the saw-knife (6) and the element (15) carrying the dog (10), these connection means (19, 20) provoking the revolving of this element (15) and of this dog (10) (progressively) from the initial position of this dog during each of saw-operation so that, before the end of this operation, the dog (10) is taken away of this initial position, enough to be no more into contact with any section in the process of being sawn and to free this section of some contact with the dog.

2. Device in accordance with the point 1., characterized by the fact that the cinematic connection means of mecanical type, include at least a connecting rod (19) articulated, on the one hand, by a first end with the moving organ (4) carrying the saw-knife (6), on the other hand, by his second end with the element (15) carrying the dog (10).

3. Device in accordance with the point 2., characterized by the fact that the connecting rod (19) is articulated with the moving organ (4) carrying the saw-knife (6) through a rod (20) with an adjustablelength, this rod with a first end (20A) articulated with the first end of the connecting rod (19) and a second end (20B) by which it is clamped to a piece of the moving organ (4) movable in the same time.

4. Device in accordance with one of the points 1. to 3., for a saw-machine including a support table (8) of a section to saw in the long piece, a part at least of this support table (8) clamped for moving in rotation around a geometrical axle, characterized by the fact that this geometrical axle is this one of an additional shaft (23) held up parallel to the revolving axle in bearings (24A, 24B) clamped on the frame (1). The moving part in revolving of the support table (8) is clamped at this additional shaft (23) and it is functionaly joined up to a work organ (26) set on the frame (1) to be moved by the organ (4) carrying the saw-knife (6) at the end of the sawing running after the execution of the sawing operation, this work organ (26) moving, then, the part (8A) of the support table (8) to an evacuation position of a separated section of the long piece against the effect of a callback spring (31) of this table part to his initial position.

5. Device in accordance with the point 4., characterized by the fact that this whole of the support table (8) is clamped for moving around the geometrical axle of this additional shaft (23).

6. Device in accordance with the point 4., characterized by the fact that this part (8A) of the support table (8) is clamped at this additional shaft (23) and this shaft is clamped (free) in rotation in bearings (24A, 24B).

7. Device in accordance with the point 4., characterized by the fact that the work organ (26) is connected to the connecting rod (19) through a connecting (34) with dead running during the execution of the sawing operation and with active running after the sawing operation.

8. Device in accordance with the point 6., characterized by the fact that the additional shaft (23) is equipped with a radial arm (29) and a pusher is clamped sliding on the frame (1) to refit on this radial arm (29) and be moved against the effect of the spring (31) by the moving organ (4) carrying the saw-knife (6) after the execution of the sawing operation.

## Patentansprüche

1. Vorrichtung um ein gesägten Stück in einem verlängernten Teil auf einer Sägemaschine zu befreien ; Sägemaschine mit einem Gestell (1), einen Schraubstock (9) aus diesem Gestell aufgestellt um ein verlängernten Teil zu halten, einem beweglichen Organ (4) auf diesem Gestell (1) aufgestellt um ein Zersägenlauf zu vollführen, in einer queren Fläsche in Bezug auf einem verlängernten Teil (in dem Schraubstock gehaltet), einer Sägeklinge (6) auf diesem beweglichen Organ (4) aufgestellt und durch einen Motor angetrieben, einem Anschlag (10) auf einem Gestelltelement aufgestellt (15) und auf diesem Element gegenüber dem Schraubstock regulierbar in Bezug auf die Sägeklinge (6), von Lager ausgeprägt (17A, 17B) ; diese Lager an dem Gestell (1) befestigt sind und dieses Element (15) teilweise enthält ; dieses Element den beweglichen Anschlag trägt, um es um eine senkrechte Achse gescwenken zu beiten, Bewegungslehreverbindungmittel (19, 20) das Organ (4) vergebinden ; dieses Organ die Sägeklinge (6) getragen, mit dem Element (15) dem Anschlag (10) getragen, diese Verbindungmittel (19, 20) die Drehbewegung dieses Element (15) und des Anschlag (10) allmählich begewirken, von dem anfänglichen Stand dieses Anschlag, während jedes Zersägenvorgang so dass, vor der Ende dieses Vorgang, der Anschlag (10) in Bezug auf seinen anfänglichen Stand genug entfernt ist, um in Berühren mit einem beliebigen Stück nicht mehr zu sein und um diesen Stück in Bezug auf den Anschlag zu befreien.

2. Vorrichtung gemäss der Forderung 1. von den Bewegungslehreverbindungmittel ausgeprägt ; diese Verbindungmittel eine Pleuelstange (19) mindestens einschliessen ; diese Pleuelstange einerseits von einem ersten Ende mit dem Organ (4) (die Sägeklinge (6) getragen) beweglich ist, und von dem zweiten Ende mit dem Element (15) (den Anschlag (10) getragen) andererseits beweglich ist.

3. Vorrichtung gemäss der Forderung 2. von der Pleuelstange (19) ausgeprägt ; diese Pleuelstange mit dem Organ (4) (die Sägeklinge (6) getragen) durch Vermittlung eines Stiel (20) (regulierbare Länge) beweglich ist ; diese Stiel ein erstes Ende mit dem ersten Pleuelstangeende (19) beweglich hat und ein zweites Ende (20B), mit welchen an einem Organteil (4) befestig ist, gleichzeitig verschiebunglich.

4. Vorrichtung gemäss den Forderungen 1.-3., für eine Sägemaschine einen Stützetisch (8) eingeschlossen ; mindenstens ein Teil dieses Tisch um eine geometrische Achse umdrehung aufgestellt ist, diese Achse die einer zusätzlichen Welle (23) ist ; diese Welle an der Drehbewegungachse gleichlaufend getragen ist, im Lager (24A, 24B) an dem Gestell (1) befestig ; der bewegliche Teil des Stützetisch (8) umdrehung an dieser zusätzlichen Welle (23) befestig ist und sie an diesem Handgrifforgan (26) funktionell vergebunden ist (auf dem Gestell (1)) um von dem Organ (4) die Sägeklinge (6) getragen angetrieben zu sein, Ende Sägelaufen nach der Sägehandling ; dieses Handgrifforgan (26) den Stützeteil (8, 8A) getrieben, bis an eine Raümmungstellung eines Stück ; dieses Stück von dem verlängernten Teil getrennt ist, gegen die Wirkung einer Zurückberufungspringfeder (31) dieses Tischteil in Bezug auf seinen anfänglichen Stand.

5. Vorrichtung gemäss der Forderung 4., von der Ganzeit des Stützetisch ausgeprägt ; dieser Stützetisch um eine geometrische Achse umdrehung aufgestellt ist.

6. Vorrichtung gemäss der Forderung 4., von dem Stützetischteil (8, 8A) ausgeprägt ; dieser Teil an dieser zusätzlichen Welle (23) ist, und diejenige in ihren Lager (24A, 24B) umdrehung frei aufgestellt ist.

7. Vorrichtung gemäss der Forderung 4., von dem Handgrifforgan (26) ausgeprägt ; dieses Organ mit der Pleuelstange (19) angekuppelnt ist ; dieses Ankuppeln (34), während der Sägehandlung, mit toten Lauf ist, und, nach der Sägehandlung, mit tätig Lauf ist.

8. Vorrichtung gemäss der Forderung 6., von der zusätzlichen Welle (23) ausgeprägt ; diese Welle mit einem radialen Hebel (29) ausgestattet ist ; ein Stoss (27) auf dem Gestell (1) geglitten aufgestellt ist, um auf diesem radialen Hebel (29) auszuruhen und gegen die Springfeder (31) von dem beweglichen Organ (4) angetrieben zu sein ; dieses Organ, nach der Sägehandlung, eine Sägeklinge (6) getragen.
